# DEMANDE DE BREVET EUROPEEN

(11) **EP 4 755 803 A1**
(43) Date de publication de la demande: **10.06.2026**
(21) Numéro de dépôt: 24217959.6
(22) Date de dépôt: 06.12.2024
(51) Int. Cl.: B64G 1/16, B64G 1/50

(54) **ROVER SPATIAL À GESTION THERMIQUE OPTIMISÉE ET PROCÉDÉ DE GESTION THERMIQUE D'UN TEL ROVER**

(71) Demandeur: Venturi Lab SA, 1720 Corminboeuf (CH)
(72) Inventeur: BAUMGARTNER, Gérard, 1684 MEZIERES (CH); OLSOMMER, David, 1616 ATTALENS (CH); DELFINO, Antonio, 1772 GROLLEY (CH)
(74) Mandataire: Cabinet Beau de Loménie

(57) **Abrégé**

L'invention concerne un rover spatial (2) à gestion thermique optimisée pour évoluer dans un environnement extrême tel que rencontré sur la Lune, comprenant un châssis (4) recevant des composants du rover, quatre roues (10) rattachées au châssis, et une carrosserie (14) active assemblée sur le châssis et comprenant des volets de roue (16) mobiles entre une position d'ouverture dans laquelle ils découvrent les roues et une position de fermeture dans laquelle ils recouvrent les roues, et des trappes d'accès (18) mobiles entre une position d'ouverture dans laquelle au moins certains composants du rover sont découverts et une position de fermeture dans laquelle au moins certains composants du rover sont confinés à l'intérieur de la carrosserie. La carrosserie est mobile par rapport au châssis entre une position haute de roulage dans laquelle elle est surélevée par rapport aux roues, et une position basse de confinement dans laquelle est abaissée par rapport aux roues pour augmenter le confinement des composants du rover afin de limiter les déperditions de chaleur.

## Description

### Arrière-plan de l'invention

La présente invention concerne le domaine général des rovers spatiaux conçus pour évoluer dans un environnement extrême tel que rencontré sur la Lune. Elle concerne plus précisément un rover spatial à gestion thermique optimisée.

Les rovers spatiaux, également appelés astromobiles, sont des engins d'exploration mobiles pouvant transporter des astronautes ou être autonomes dans leurs déplacements et qui sont conçus pour se déplacer à la surface d'un corps céleste ou d'une planète autre que la Terre, par exemple la Lune ou Mars, afin d'effectuer des prélèvements, des analyses ou des photographies à la surface du corps céleste.

Typiquement, un rover se compose d'un châssis monté sur roues et supportant différents composants dont notamment un moteur, un système de navigation, un système de communication, des outils de prélèvement et de déchargement, des emplacements pour recevoir les échantillons prélevés par les outils, des batteries pour alimenter le moteur et ces équipements, des panneaux solaires pour recharger les batteries, etc.

Le recours à des rovers est particulièrement intéressant pour l'exploration de zones difficilement accessibles et/ou soumises à des conditions extrêmes. Par exemple, dans le cadre de l'exploration de la Lune, le pôle Sud présente un intérêt particulier pour les scientifiques en raison de la présence de glace d'eau dans ses cratères d'obscurité éternelle. Or, le rayonnement solaire est toujours rasant dans ces régions polaires et les reliefs créent des zones qui sont en permanence à l'ombre (notamment le fond des cratères) et dans lesquelles la température se maintient en dessous de 0°C. Le rover qui explore ces régions polaires est donc soumis à des variations de température extrêmes pouvant aller de - 240°C à +130°C.

Dans de telles conditions extrêmes, il est particulièrement important de s'assurer que les composants du rover ne se dégradent pas, notamment lorsque les températures deviennent très basses. Ceci peut être obtenu en intégrant au rover des moyens de stockage d'énergie thermique permettant de stocker de l'énergie produite par les panneaux solaires pendant le jour lunaire pour réchauffer les composants pendant la nuit lunaire (au cours de laquelle les panneaux solaires sont inutiles). Toutefois, compte-tenu du peu d'énergie solaire disponible aux pôles (le rayonnement solaire y étant toujours rasant), les moyens de stockage d'énergie thermique risquent d'être insuffisants et la gestion thermique du rover et de ses composants devient alors véritablement problématique.

### Objet et résumé de l'invention

La présente invention a donc pour but principal de pallier de tels inconvénients en proposant une architecture de rover spatial qui lui permet de tenir aux très fortes variations de températures qu'il peut rencontrer notamment aux pôles de la Lune.

Conformément à l'invention, ce but est atteint grâce à un rover spatial à gestion thermique optimisée pour évoluer dans un environnement extrême tel que rencontré sur la Lune, comprenant :
- un châssis recevant des composants du rover dont un moteur, des batteries, un système de navigation, un système de communication, des outils de prélèvement et de déchargement, des emplacements pour recevoir des charges utiles, et des moyens internes de stockage d'énergie thermique ;
- au moins quatre roues rattachées au châssis ; et
- une carrosserie active assemblée sur le châssis et comprenant :
   ∘ des volets de roue qui sont mobiles entre une position d'ouverture dans laquelle ils découvrent les roues et une position de fermeture dans laquelle ils recouvrent les roues, et
   ∘ des trappes d'accès qui sont mobiles entre une position d'ouverture dans laquelle au moins certains composants du rover sont découverts et une position de fermeture dans laquelle au moins certains composants du rover sont confinés à l'intérieur de la carrosserie,
- la carrosserie étant mobile par rapport au châssis entre une position haute de roulage dans laquelle elle est surélevée par rapport aux roues pour permettre au rover de rouler, et une position basse de confinement dans laquelle est abaissée par rapport aux roues pour augmenter le confinement des composants du rover afin de limiter les déperditions de chaleur.

Le rover selon l'invention est remarquable notamment en ce que son châssis est mobile et peut être piloté pour être mis en position basse de confinement dans laquelle l'ensemble des composants du rover se trouve confinés à l'intérieur de la carrosserie. Cette position basse de confinement est particulièrement adaptée aux phases statiques du rover pendant les nuits lunaires au cours desquelles les températures sont les plus basses. En effet, lorsque la carrosserie est dans cette position basse de confinement, les moyens internes de stockage d'énergie thermique du rover permettent de réchauffer les composants du rover tout en limitant les déperditions de chaleur vers l'extérieur. Les composants du rover sont protégés et peuvent ainsi tenir aux conditions extrêmes dans lesquelles évolue le rover.

De préférence, les roues sont rattachées au châssis par l'intermédiaire de suspensions munies d'un mécanisme de rétractation des roues.

De préférence également, les volets de roue sont munis sur leur surface interne de panneaux solaires pour recharger les batteries et/ou alimenter des composants du rover.

De préférence encore, les trappes d'accès de la carrosserie sont munis sur leur surface externe de panneaux solaires pour recharger les batteries et/ou alimenter des composants du rover.

Le rover peut comprendre en outre des panneaux solaires déployables lorsque le rover est en position statique afin de recharger les batteries.

Les moyens internes de stockage d'énergie thermique peuvent être thermique, mécanique, chimique, électrique ou/et gazeux et comprendre des batteries, des piles à combustibles, des réservoirs tampons de fluides caloporteurs eux-mêmes comportant des liquides à changement de phases, et pour le transfert d'énergie des caloducs, ou/et une/des boucle(s) de circulation des fluides caloporteurs.

L'invention a également pour objet un procédé de gestion thermique d'un rover spatial tel que défini précédemment, dans lequel :
- lors des phases de roulage du rover, la carrosserie est mise en position haute de roulage avec les volets mis en position d'ouverture et les trappes mis en position de fermeture ; et
- lors des phases statiques de repos du rover, la carrosserie est mise en position basse de confinement avec les volets et les trappes mis en position de fermeture afin de limiter les déperditions de chaleur.

Le procédé peut comprendre en outre des phases statiques d'opération du rover dans lesquelles la carrosserie est mise en position haute de roulage avec les volets et les trappes mis en position d'ouverture afin de permettre la mise en action des outils de prélèvement et de déchargement.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'un rover spatial selon l'invention dans sa configuration de roulage ;
- la figure 2 est une vue en perspective du rover de la figure 1 dans une configuration de phase statique (par exemple pendant une nuit lunaire) ; et
- la figure 3 est une vue en perspective du rover de la figure 1 dans une configuration de manipulation.

### Description détaillée de modes de réalisation

L'invention concerne un rover spatial (ou astromobile) conçu pour évoluer dans un environnement extrême tel que rencontré sur la Lune, notamment au niveau des régions polaires de la Lune.

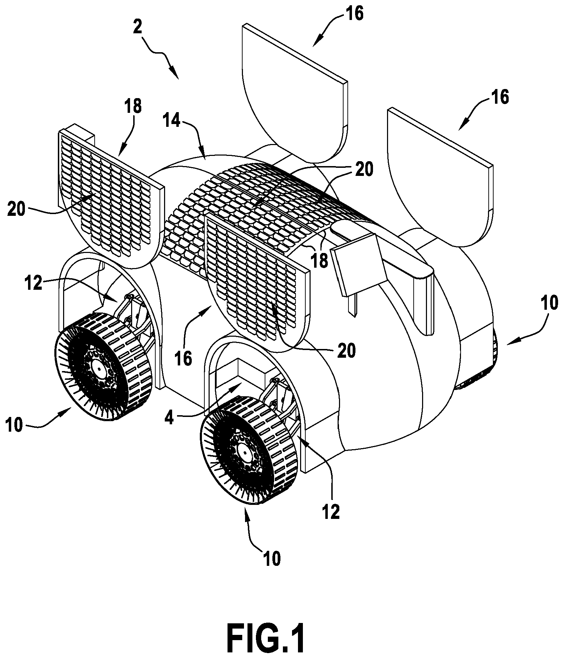

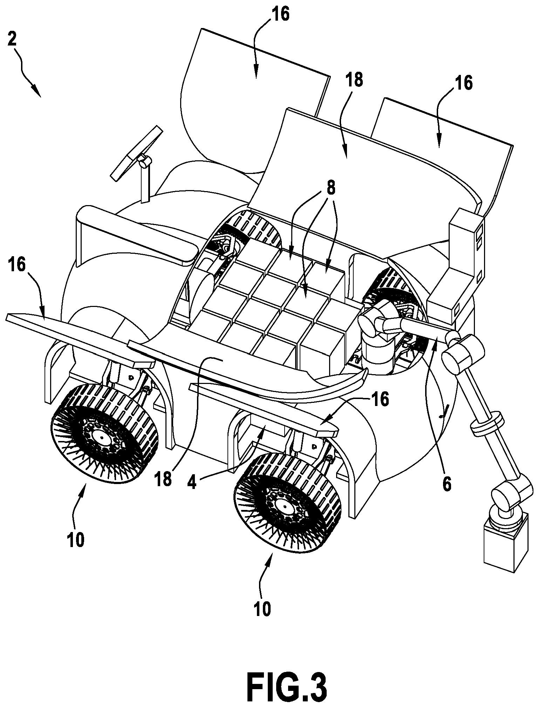

Comme représenté sur les figures 1 à 3, ce rover 2 comprend un châssis 4 qui reçoit une pluralité de composants dont notamment : un moteur, des batteries, un système de navigation, un système de communication, des outils de prélèvement et de déchargement 6 (figure 3), des emplacements pour recevoir des charges utiles 8 (figure 3), des moyens internes de stockage d'énergie thermique, etc.

Ces différents composants sont bien connus de l'homme du métier et ne seront donc pas décrits en détails ici. En particulier, les moyens internes de stockage d'énergie thermique peuvent être thermique, mécanique, chimique, électrique ou/et gazeux (hydrogène et oxygène) et comprendre des batteries, des piles à combustibles, des réservoirs tampons de fluides caloporteurs eux-mêmes comportant des liquides à changement de phases, et pour le transfert d'énergie des caloducs, ou/et une/des boucle(s) de circulation des fluides caloporteurs.

Bien entendu, le châssis du rover peut embarquer d'autres composants nécessaires à la mission du rover.

Le rover 2 comprend également au moins quatre roues 10 qui sont rattachées au châssis 4 par l'intermédiaire de suspensions 12. Par exemple, les roues 10 sont des roues déformables à support de charge non-pneumatique telles que décrites dans la publication EP 4,331,867.

Selon l'invention, le rover 2 comprend encore une carrosserie active 14 qui est assemblée sur le châssis 4 et qui comprend notamment des volets de roue 16 et des trappes d'accès 18.

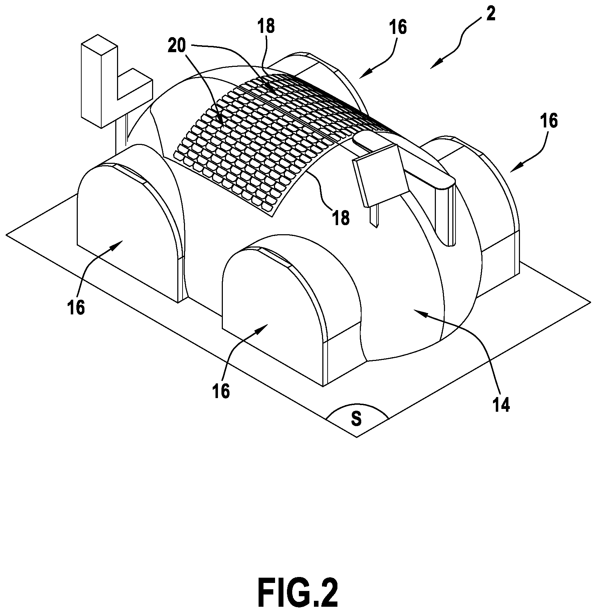

Plus précisément, les volets de roue 16 sont des portes articulées sur la carrosserie 14 au niveau des passages de roue et qui sont mobiles entre une position d'ouverture dans laquelle ils découvrent les roues (cas des figures 1 et 3) et une position de fermeture dans laquelle ils recouvrent les roues (cas de la figure 2).

Quant aux trappes d'accès 18, il s'agit également de portes articulées sur la carrosserie au niveau de la partie centrale de celle-ci. Ces trappes d'accès sont ainsi mobiles entre une position d'ouverture dans laquelle au moins certains composants du rover sont découverts (cas de la figure 3) et une position de fermeture dans laquelle au moins certains des composants du rover sont confinés à l'intérieur de la carrosserie (cas des figures 1 et 2).

Toujours selon l'invention, la carrosserie 14 est également mobile par rapport au châssis 4 entre une position haute de roulage dans laquelle elle est surélevée par rapport aux roues 10 pour permettre au rover de rouler (cas des figures 1 et 3), et une position basse de confinement dans laquelle est abaissée par rapport aux roues pour augmenter le confinement des composants du rover afin de limiter les déperditions de chaleur (cas de la figure 2).

De façon plus précise, lorsque la carrosserie 14 est dans sa position basse de confinement (figure 2), la garde au sol du rover est quasi-nulle (la carrosserie vient toucher le sol S). En mettant les volets de roue 16 et les trappes d'accès 18 dans leur position respective de fermeture, les composants du rover situés à l'intérieur de la carrosserie sont totalement confinés.

Ainsi, dans cette position de confinement du rover (qui est par exemple activée pendant les nuits lunaires pour une mission sur la Lune), les moyens de stockage d'énergie thermique peuvent être également activés de façon à chauffer les composants sensibles du rover et ainsi leur permettre de tenir aux conditions extrêmes des nuits lunaires.

A l'inverse, lorsque le rover 2 doit se déplacer (cas de la figure 1), la carrosserie 14 est mise dans sa position haute de roulage et les volets de roue 16 sont en position d'ouverture (les trappes d'accès 18 étant en position de fermeture pour protéger les composants du rover).

Par ailleurs, lorsque le rover 2 doit opérer sans se déplacer (par exemple pour effectuer des prélèvements - cas de la figure 3), la carrosserie 14 reste dans sa position haute de roulage avec les volets de roue 16 en position d'ouverture. Quant aux trappes d'accès 18, elles sont mises en position de fermeture pour accéder aux outils de prélèvement et de déchargement 6.

Afin de faciliter la mise en position de confinement du rover, les roues 10 du rover sont rattachées au châssis 4 par l'intermédiaire de suspensions 12 qui sont avantageusement munies d'un mécanisme de rétractation des roues (non représenté sur les figures). Un tel mécanisme permet d'agir sur les suspensions pour rétracter les roues en direction du châssis afin qu'elles ne soient plus en saillie par rapport à la carrosserie 14 du rover.

De façon avantageuse également, les volets de roue 16 sont munis sur leur surface interne de panneaux solaires 20 pour recharger les batteries et/ou alimenter des composants du rover (ces panneaux solaires sont exposés aux rayonnements solaires lorsque les volets de roue sont en position d'ouverture).

Ainsi, sur l'exemple de la figure 1 dans lequel le rover 2 est configuré pour explorer les régions polaires de la Lune où le rayonnement solaire est toujours rasant, les volets de roue 16 munis de leurs panneaux solaires 20 sont positionnés sensiblement à la verticale lorsqu'ils sont en position d'ouverture afin de capter un maximum de rayonnement solaire.

De même, les trappes d'accès 18 de la carrosserie comprennent avantageusement des panneaux solaires 20 sur leur surface externe pour recharger les batteries et/ou alimenter des composants du rover (ces panneaux solaires sont exposés aux rayonnements solaires lorsque les trappes d'accès sont en position de fermeture - figures 1 et 2).

Selon encore une autre disposition avantageuse non représentée sur les figures, le rover peut comprendre en outre des panneaux solaires qui sont déployables lorsque le rover est en position statique afin de recharger les batteries.

## Revendications

1. Rover spatial (2) à gestion thermique optimisée pour évoluer dans un environnement extrême tel que rencontré sur la Lune, comprenant :
- un châssis (4) recevant des composants du rover dont un moteur, des batteries, un système de navigation, un système de communication, des outils de prélèvement et de déchargement (6), des emplacements pour recevoir des charges utiles (8), et des moyens internes de stockage d'énergie thermique ;
- au moins quatre roues (10) rattachées au châssis ; et
- une carrosserie (14) active assemblée sur le châssis et comprenant :
∘ des volets de roue (16) qui sont mobiles entre une position d'ouverture dans laquelle ils découvrent les roues et une position de fermeture dans laquelle ils recouvrent les roues, et
∘ des trappes d'accès (18) qui sont mobiles entre une position d'ouverture dans laquelle au moins certains composants du rover sont découverts et une position de fermeture dans laquelle au moins certains composants du rover sont confinés à l'intérieur de la carrosserie,
- la carrosserie (14) étant mobile par rapport au châssis (4) entre une position haute de roulage dans laquelle elle est surélevée par rapport aux roues pour permettre au rover de rouler, et une position basse de confinement dans laquelle est abaissée par rapport aux roues pour augmenter le confinement des composants du rover afin de limiter les déperditions de chaleur.

2. Rover selon la revendication 1, dans lequel les roues (10) sont rattachées au châssis (4) par l'intermédiaire de suspensions (12) munies d'un mécanisme de rétractation des roues.

3. Rover selon l'une des revendications 1 et 2, dans lequel les volets de roue (16) sont munis sur leur surface interne de panneaux solaires (20) pour recharger les batteries et/ou alimenter des composants du rover.

4. Rover selon l'une quelconque des revendications 1 à 3, dans lequel les trappes d'accès (18) de la carrosserie sont munis sur leur surface externe de panneaux solaires (20) pour recharger les batteries et/ou alimenter des composants du rover.

5. Rover selon l'une quelconque des revendications 1 à 4, comprenant en outre des panneaux solaires déployables lorsque le rover est en position statique afin de recharger les batteries.

6. Rover selon l'une quelconque des revendications 1 à 5, dans lequel les moyens internes de stockage d'énergie thermique être thermique, mécanique, chimique, électrique ou/et gazeux et comprendre des batteries, des piles à combustibles, des réservoirs tampons de fluides caloporteurs eux-mêmes comportant des liquides à changement de phases, et pour le transfert d'énergie des caloducs, ou/et une/des boucle(s) de circulation des fluides caloporteurs.

7. Procédé de gestion thermique d'un rover spatial selon l'une quelconque des revendications 1 à 6, dans lequel :
- lors des phases de roulage du rover, la carrosserie est mise en position haute de roulage avec les volets mis en position d'ouverture et les trappes mis en position de fermeture ; et
- lors des phases statiques de repos du rover, la carrosserie est mise en position basse de confinement avec les volets et les trappes mis en position de fermeture afin de limiter les déperditions de chaleur.

8. Procédé selon la revendication 7, comprenant en outre des phases statiques d'opération du rover dans lesquelles la carrosserie est mise en position haute de roulage avec les volets et les trappes mis en position d'ouverture afin de permettre la mise en action des outils de prélèvement et de déchargement.
